**Europäisches Patentamt**

**European Patent Office**

**Office européen des brevets**

(19)

(11) Numéro de publication : **0 121 449**
**B1**

(12) # FASCICULE DE BREVET EUROPÉEN

(45) Date de publication du fascicule du brevet :
15.06.88

(21) Numéro de dépôt : 84400336.8

(22) Date de dépôt : 17.02.84

(51) Int. Cl.⁴ : **G 02 F   1/29**, G 02 F   1/137,
G 02 F   1/135

(54) Dispositif de déflexion statique d'un faisceau infra-rouge.

(30) Priorité : 25.02.83 FR 8303132

(43) Date de publication de la demande :
10.10.84 Bulletin 84/41

(45) Mention de la délivrance du brevet :
15.06.88 Bulletin 88/24

(84) Etats contractants désignés :
DE GB

(56) Documents cités :
FR-A- 2 134 160
FR-A- 2 254 057
US-A- 4 066 334

(73) Titulaire : THOMSON-CSF
173, Boulevard Haussmann
F-75379 Paris Cédex 08 (FR)

(72) Inventeur : Huignard, Jean-Pierre
THOMSON-CSF SCPI 173, bld Haussmann
F-75379 Paris Cedex 08 (FR)
Inventeur : Malard, Marcel
THOMSON-CSF SCPI 173, bld Haussmann
F-75379 Paris Cedex 08 (FR)
Inventeur : Corlieu, Guy
THOMSON-CSF SCPI 173, bld Haussmann
F-75379 Paris Cedex 08 (FR)

EP 0 121 449 B1

# 0 121 449

## Description

La présente invention a pour objet un dispositif de déflexion d'un faisceau infra-rouge polarisé en une série discrète de directions prédéterminées, mettant en œuvre un réseau de diffraction.

Pour opérer la déflexion d'un faisceau d'énergie rayonnée avec une grande précision, il est en général préférable d'utiliser un dispositif fonctionnant par valeurs discrètes, celles-ci pouvant en effet être exactement définies par la structure même du dispositif ; elles sont donc plus stables, c'est-à-dire insensibles aux fluctuations ou perturbations extérieures.

Un réseau de diffraction permet une déflexion globale d'un faisceau incident dans une direction priviligiée prédéterminée et la direction qui lui est symétrique par rapport à la normale au plan du réseau. Un tel réseau ne permet donc d'obtenir la déflexion d'un faisceau incident que dans deux directions prédéfinies symétriques. Pour constituer un dispositif permettant de défléchir successivement un faisceau dans plusieurs directions définies, il est donc nécessaire d'associer plusieurs réseaux, avec les inconvénients que cela entraîne au niveau d'une part du rendement lumineux de la déflexion, et d'autre part, surtout, de la précision de la déflexion.

Un dispositif de l'art antérieur est décrit dans la demande de brevet français publiée sous le numéro FR-A-2.254.057. Ce dispositif est un dispositif de déflexion d'un faisceau d'énergie rayonnée cohérente et polarisée, sous l'action d'un signal électrique de commande, comportant : une couche d'un matériau à cristaux liquides ; des électrodes portées par chacune des faces de cette couche, les électrodes de l'une des faces au moins étant transparentes, et des moyens d'excitation des électrodes, recevant un signal de commande. L'une des faces de cette couche porte un ensemble d'électrodes de même étendue, contiguës mais isolées électriquement, portées sélectivement à des potentiels électriques de valeurs prédéfinies, modifiant ainsi spatialement le déphasage du faisceau incident afin de constituer les lignes d'un réseau diffractant. Le pas de ce réseau est variable et fonction de la répartition des valeurs prédéfinies du potentiel sur les électrodes.

Par rapport à ce dispositif de l'art antérieur, le dispositif de l'invention a pour objet la déflexion d'un faisceau polarisé situé dans le domaine infra-rouge. En effet l'extension du champ des possibilités des dispositifs opto-électriques fonctionnant dans l'infra-rouge moyen, notamment ceux travaillant dans la bande 9,5 um-10,6 um qui est celle dans laquelle fonctionne le laser à dioxyde de carbone, fait apparaître la nécessité d'utiliser un dispositif de déflexions rapide, donc statique, d'un faisceau lumineux permettant l'accès aléatoire de tous les points de l'intervalle angulaire de déflexion.

Les cristaux liquides présentent la propriété de fournir des variations locales notables de leur indice sous l'effet d'un champ électrique qui leur est appliqué. Cette propriété permet donc de faire apparaître, dans une lame de cristal liquide comprise entre deux jeux d'électrodes convenablement disposées, un réseau d'indice dont on peut à volonté modifier le pas et la direction des « traits ». Ces propriétés des cristaux liquides permettent de réaliser un système de balayage bidimensionnel permettant un accès aléatoire en tous points du cadre balayé. Un tel dispositif permet notamment d'effectuer un balayage de type « cavalier », ou à accès aléatoire qui pourra être réalisé à partir du point particulier auquel on vient d'avoir accès. Enfin, ce dispositif permet de défléchir des faisceaux d'assez grandes dimensions.

De plus si l'on compare ce dispositif de l'art antérieur, le rendement avec une structure linéaire variant de 0 à $\pi$ est limité à 30 %. Avec le signal de commande préconisé selon l'invention qui est un signal périodique en dent de scie variant de 0 à 2 $\pi$ et comportant N « marches » ou paliers par période, le rendement est de l'ordre de 80 %.

L'invention a pour objet un dispositif de déflexion variable d'un faisceau infra-rouge polarisé, caractérisé en ce qu'il comprend une couche de cristaux liquides, des moyens de modulation de cette couche de cristaux liquides, et des moyens de génération de signaux de commande électriques, ces moyens de modulation appliquant aux bornes de cette couche ces signaux de commande, les moyens de modulation de la couche de cristaux liquides comportant des électrodes disposées sur les deux faces de cette couche, les électrodes de la face d'incidence du faisceau infra-rouge étant transparentes, isolées électriquement et disposées, selon au moins une direction, sur des zones équidistantes entre elles et séparées d'espaces interélectrodes de grandeur comprise entre 1 et 10 micromètres, une électrode commune étant disposée sur l'autre face de cette couche de cristaux liquides, et en ce que les signaux de commande permettent de créer dans cette couche des variations locales d'indice formant un réseau de diffraction de ce faisceau de pas réglable, ces signaux de commande correspondant à une répartition de la tension sur les électrodes séparées par rapport à l'électrode commune qui est une répartition périodique en dents de scie variant progressivement, au cours de chaque période de la dent de scie entre une valeur minimum et une valeur maximum selon des marches d'escalier, ces signaux comportant plus de deux marches par période de façon que pour l'amplitude maximum le déphasage du faisceau soit égal à 2 $\pi$.

D'autres aspects et avantages de l'invention seront mieux compris à l'aide de la description ci-après, fournie à titre d'exemple non limitatif, ainsi que les figures annexées parmi lesquelles :

les figures 1 et 2 représentent le dispositif de l'invention ;

les figures 3 à 9 illustrent différents aspects du dispositif de l'invention ;

la figure 10 illustre une variante du dispositif de l'invention.

Le dispositif de l'invention utilise l'effet électro-optique pour imposer dans le matériau actif une structure de phase diffractante du type réseau d'indice.

L'une des caractéristiques de l'invention réside dans l'utilisation d'un type de matériau électro-optique particulier : les cristaux liquides. La perte par diffusion est réduite (pour $\lambda \approx 10,6\ \mu m$ par exemple), l'absorption résiduelle est faible et la forte anisotropie naturelle du milieu donne lieu à des coefficients électro-optiques très élevés (spécialement à 10,6 $\mu$m).

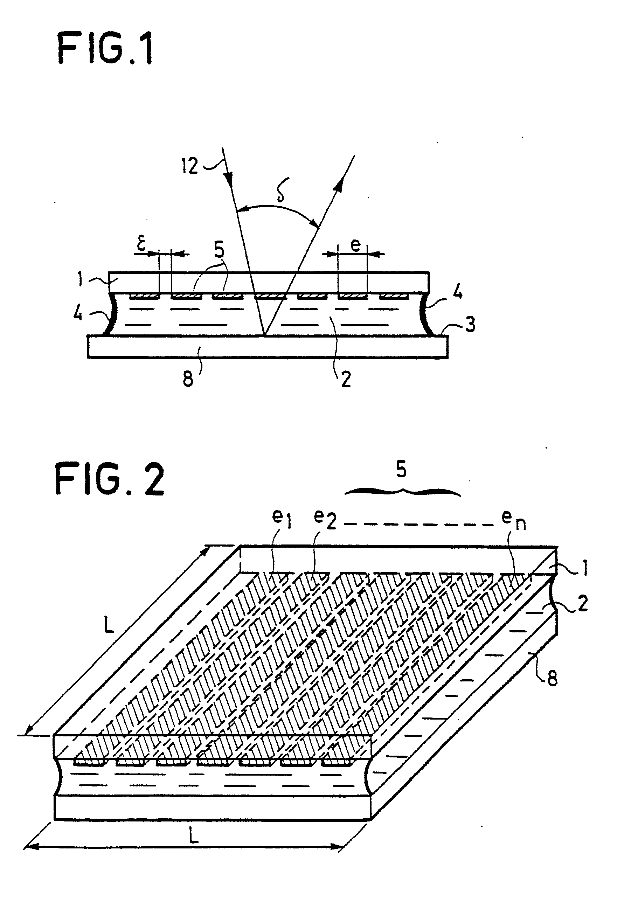

Les schémas des figures 1 et 2 représentent l'une des réalisations possibles du dispositif proposé et aident à en comprendre le fonctionnement. Le dispositif illustré est, à titre d'exemple non limitatif, un carré de côté L.

On distingue sur ces figures :

une fenêtre 1 sur laquelle sont disposées les électrodes 5 en forme de bande $e_o$ à $e_n$. La fenêtre 1 doit être transparente au rayonnement incident du faisceau polarisé 12 ; le matériau utilisé peut être du séléniure de zinc (Zn Se) pour une longueur d'onde de rayonnement $\lambda = 10,6\ \mu$m par exemple. Les électrodes $e_o$ à $e_n$ doivent, elles aussi, être transparentes, elles peuvent être réalisées en germanium (Ge) mis en forme par photolithographie par exemple.

Des cales d'épaisseur 4 isolent le matériau électrooptique 2 qui est une couche de cristaux liquides. Ces cales doivent être isolantes électriquement. Elles peuvent être réalisées par exemple en milar.

Une électrode commune 3, de préférence réfléchissante pour la longueur d'onde de travail ; ce peut être alors une couche d'or déposée sur un substrat. Il est aussi possible d'utiliser une électrode transparente, le dispositif de l'invention fonctionnant alors par transmission.

La couche de cristaux liquides 2 à laquelle les cales d'épaisseur 4, la fenêtre 1 et l'électrode commune 3 impose la forme de lame à faces planes parallèles.

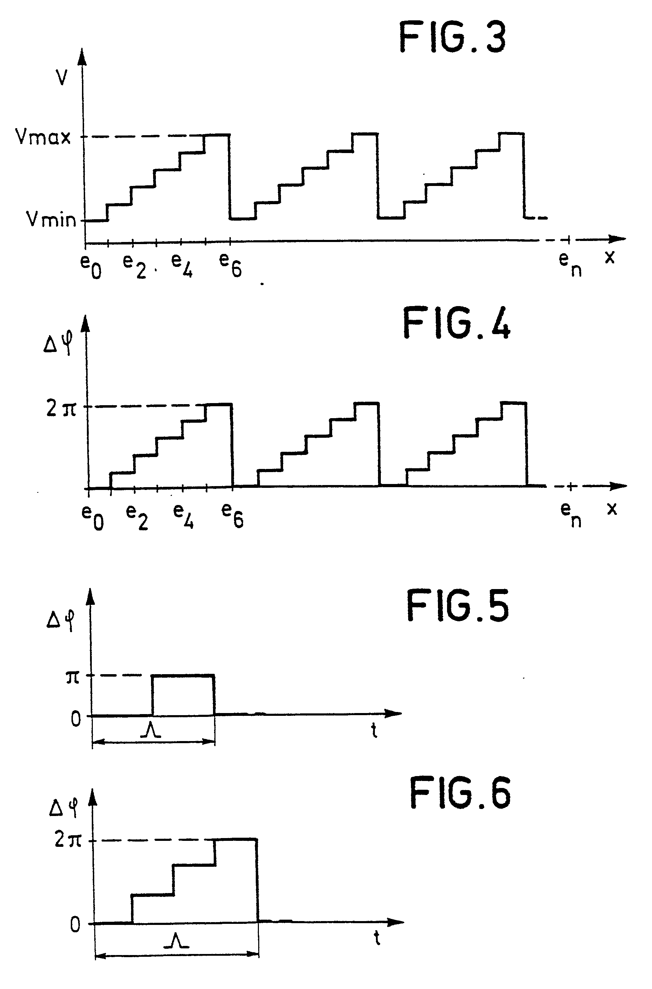

Si à un instant donné, on applique, sur les électrodes de la structure ainsi définie, une répartition de potentiel périodique telle que celle représentée sur la figure 3 par exemple. Ce signal est un signal périodique en marches d'escalier, ou « signal en dent de scie » qui comprend N « marches » ou paliers par période, N étant un nombre entier. Il en résulte une répartition de la variation de l'indice $\Delta n$ du milieu provoquant la répartition des variations de phase $\Delta\varphi$ imposée au plan d'onde du faisceau incident 12 de phase $\varphi$ représentée sur la figure 4

$$\Delta\phi = \frac{2\pi}{\lambda}\, d\, \Delta n\,.$$

Soit

$$\Delta\phi = \frac{2\pi}{\lambda}\, r$$

d = épaisseur de la couche
r = coefficient électro-optique.

A la répartition des potentiels $V_n$ correspond donc une direction particulière d'interférences constructives. Cette direction sera pratiquement unique si le pas des électrodes est suffisamment petit et si la répartition des $\Delta\varphi$ à l'intérieur du pas du réseau d'indice est convenablement choisi. La largeur des électrodes peut être comprise, par exemple, entre 5 et 25 micromètres, et l'espace interélectrode peut être de l'ordre de 5 micromètres.

L'angle de réflexion obtenu $\delta$ vaut :

$\delta \approx \lambda/\Lambda$.

$\lambda$ = longueur d'onde incidente

$\Lambda$ = pas de la « dent de scie »

Le rendement de diffraction optimum dans la direction de l'ordre 1 est obtenu si l'amplitude du déphasage au sommet de la « dent de scie » est égal à 2 $\pi$.

Pour un tel réseau de pas $\Lambda$ échantillonné suivant « N marches » ou paliers, N étant un nombre entier, le rendement de diffraction est donné par la relation :

$$\eta = \left( \frac{\sin\frac{\pi}{N}}{\pi/N} \right)^2$$

— pour un réseau binaire ; N = 2
on a alors le signal carré représenté à la figure 5, on obtient :

$$\eta = 4/\pi^2 = 40\ \%$$

— pour un réseau tel que N = 4
on a alors le signal en escalier avec 4 « marches » représenté à la figure 6, on obtient :

$$\eta = 8/\pi^2 = 80\%$$

Afin de conserver un bon rendement de diffraction dans l'ordre 1, on choisit l'échantillonnage N = 4. On a alors un réseau de pas faible tel que : $(\Lambda)_{Min} = 4(e + \varepsilon)$ et le réseau de pas le plus grand tel que $(\Lambda)_{Max} = L/100$. En effet on choisit en exemple 50 strates diffractantes dans la dimension L.

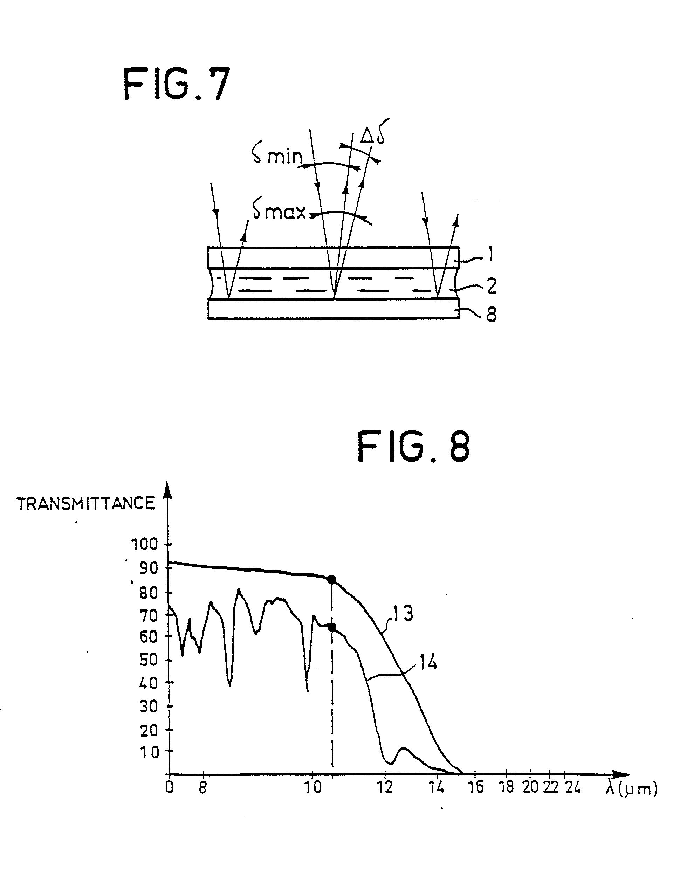

On a la déviation angulaire correspondante représentée à la figure 7 :

$$\Delta\delta = \lambda\left[\frac{1}{(\Lambda)_{Min}} - \frac{1}{(\Lambda)_{Max}}\right]$$

$$\Delta\delta = \lambda\left[\frac{1}{4(e + \varepsilon)} - \frac{100}{L}\right]$$

on a donc un nombre M de positions indépendantes :

$$M = \Delta\delta/\Delta\alpha \text{ ; avec } \Delta\alpha \text{ angle de diffraction.}$$

$$\Delta\alpha \simeq \lambda/L$$

$$M + L\frac{1}{4(e + \varepsilon)} - \frac{100}{L}$$

avec e = 20 $\mu$m : $\varepsilon$ = 5 $\mu$m ; L = 60 mm.
M = 500

Le dispositif décrit assure 500 directions indépendantes au sens du critère de Rayleigh ce qui correspondra à 100 directions parfaitement bien définies.

Le spectre de transmission infra-rouge d'une cellule cristal liquide d'épaisseur 25 $\mu$m est donné à titre d'exemple sur la figure 8. On considère alors du « P.C.B. » ou Pentyl-Cyanobephenil, la courbe 13 étant celle obtenue sans la couche de cristaux liquides et la courbe 14 avec la couche de cristaux liquides. On a alors :

Transmission moyenne à 10,6 $\mu$m = 70 %

Tension de commande V $\simeq$ 40 Volts.

Les fenêtres de la cellule sont traitées pour obtenir un alignement homogène des molécules (fonctionnement parallèle ou « twisté » à 90°). Les temps de réponse de telles cellules sont typiquement de 10 à 100 ms. Ils peuvent être améliorés par optimisation de certains paramètres tels que la structure du cristal liquide, sa viscosité, la température de fonctionnement.

Il est, bien sûr, possible d'assembler deux dispositifs selon la figure 1 de telle façon que leurs barres de commandes soient à 90° l'une de l'autre. Si ces deux dispositifs fonctionnent en transmission, ce qui est également conforme à l'esprit de l'invention, ils pourront être accolés l'un à l'autre, l'électrode commune 3 devant alors être transparente. Un tel dispositif permet une déflexion bi-dimensionnelle x-y des faisceaux.

Cependant, un dispositif plus compact est envisageable. En effet, si l'on remplace les barres de commande $e_0$ à $e_n$ par une matrice de points commandables séparément, il sera possible d'imposer une répartition de potentiel telle que, en plus de leur pas, la direction des traits du réseau puisse être modifiée à la demande. On pourra ainsi réaliser un balayage bidimensionnel en X-Y par exemple.

En effet dans ce cas les signaux de commande sont déphasés régulièrement d'une ligne d'électrodes ponctuelles à une autre. Mais ils ont toujours la même période ce qui permet de modifier la direction des traits du réseau. Dans ce cas on peut aussi bien travailler en réflexion avec une électrode commune 13 réfléchissante, ou en transmission avec une électrode commune 3 transparente.

Un autre moyen d'imprimer la répartition de tension sur le cristal liquide est celui d'un accès optique par l'intermédiaire d'un photoconducteur. On peut, pour réaliser cette impression, utiliser une valve optique photoconducteur-cristal liquide.

En effet une manière de contrôler la lumière transmise ou réfléchie par une cellule à cristal liquide nématique consiste à utiliser le phénomène de biréfringence. Toutefois, en ajoutant au matériau nématique un faible pourcentage de matériau cholestérique, on obtient un mélange doué de mémoire. L'application d'une tension alternative de fréquence plus élevée que la tension de commande permet de rétablir le mélange dans son état transparent initial.

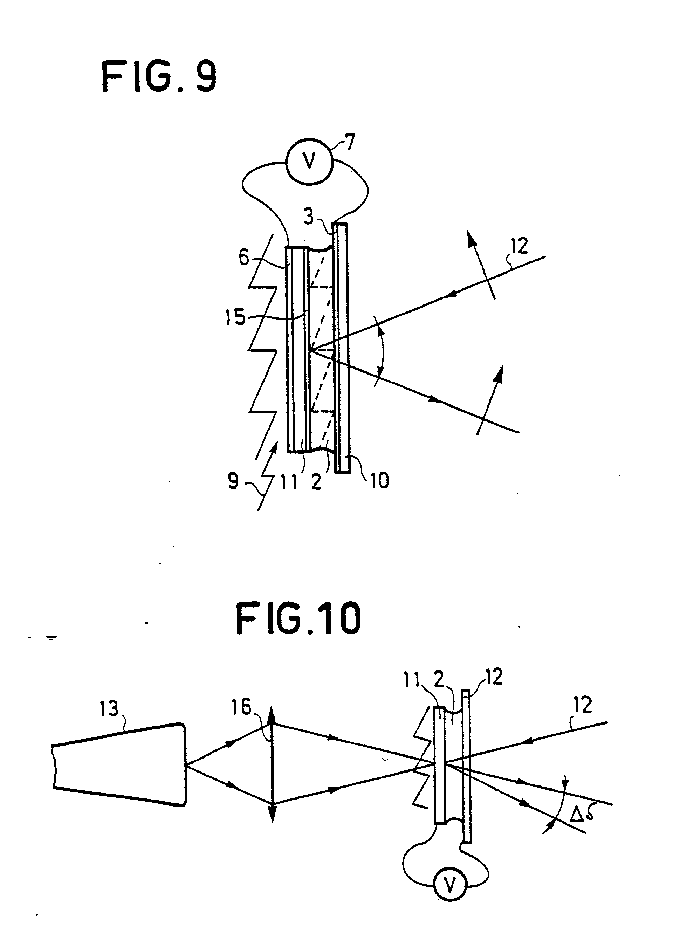

La figure 9 représente une valve optique fonctionnant en réflexion comprenant une couche de cristal liquide 2, une lame 11 de matériau photoconducteur et, le cas échéant, une couche intermédiaire 15 réfléchissante pour le rayonnement de lecture. La valve optique comprend en outre deux électrodes 3 et 6 pour appliquer la tension alternative issue du générateur 7, aux bornes de ces couches de matériau, une lame support 10 étant placée à côté de la couche de cristal liquide et destinée à supporter l'électrode 3.

Cette cellule reçoit du côté photoconducteur un rayonnement d'inscription 9 qui a la forme du signal représenté sur la figure 3. L'électrode 6 et l'ensemble constitué par l'électrode 3 et la lame support 10 doivent être respectivement transparents au rayonnement constituant le faisceau d'inscription 9. Cette électrode 3 et cette lame 10 doivent de plus être transparentes pour le faisceau 12 que l'on veut réfléchir. Les électrodes 3 et 6 peuvent être constituées par une couche de quelques dixièmes de micromètres d'épaisseur d'oxyde d'étain ou d'indium déposé par pulvérisation cathodique, où d'un mélange de ces oxydes. Si le rayonnement d'inscription est un rayonnement X, on utilisera de préférence pour l'électrode 6 une couche d'un millier d'angströms d'épaisseur d'un métal à faible numéro atomique. Cette valve optique peut aussi fonctionner en transmission, et dans ce cas la couche 15 n'existe plus.

La couche 2 de cristal liquide peut être, par exemple constituée par un matériau mésomorphe se présentant en phase nématique à la température ambiante, d'une épaisseur de 15 micromètres environ. Le matériau mésomorphe est choisi de façon à présenter une anisotropie diélectrique négative ou positive suivant l'effet désiré. Dans le cas où une couche de cristal liquide à mémoire est nécessaire, on utilisera un mélange nématique-cholestérique. Dans le cas où la couche de cristal liquide possède une structure en hélice, le rayonnement de lecture est polarisé linéairement et les moyens analyseurs sont des moyens analyseurs linéaires. La constante diélectrique relative à ces matériaux est de l'ordre de 10.

Le matériau photoconducteur constituant la lame 11 est dans l'exemple de la figure 10 un oxyde de bismuth-silicium (BSO). Il peut être avantageusement choisi pour présenter une bonne transparence dans une partie au moins du spectre correspondant à la lumière visible. Sa résistivité en absence d'illumination est de l'ordre de $10^{14}$ $\Omega$cm et diminue d'environ 1000 fois pour un éclairement de 1 mW dans le proche ultra-violet. Ces matériaux peuvent se présenter sous la forme de lames suffisamment épaisses pour qu'ils jouent le rôle de support dans la valve optique. De plus le matériau photoconducteur utilisé comporte des pièges qui sont des atomes d'impureté distribués uniformément dans le volume de ce matériau. Ils sont capables de capturer un électron ou un trou qui ont diffusé à partir de l'endroit où ils ont été engendrés par excitation photonique. Lors de l'éclairement d'une lame photoconductrice les photons incidents qui ont une énergie suffisante peuvent créer des paires électron-trou. Si un champ électrique est appliqué à la lame, les électrons et les trous sont entraînés vers les électrodes. Pour un champ électrique continu les électrons sont attirés par l'électrode positive et les trous vers l'électrode négative. Les porteurs de charge créés dans le matériau par le rayonnement ionisant ou par l'excitation photonique sont piégés dans une région du volume où apparaît une charge d'espace qui réduit sensiblement le transport des charges électriques. Lorsqu'on applique au photoconducteur une tension alternative, si la fréquence de la tension alternative est suffisamment grande, la charge d'espace dans le photoconducteur n'a pas le temps de s'établir et le courant mesuré dans le circuit extérieur est voisin du courant initial Io. Dans ces conditions la tension transférée au cristal liquide est notable et contribue à commander efficacement la modulation optique que ce cristal liquide permet d'obtenir. Il est donc possible de générer ainsi le réseau permettant de défléchir le faisceau infra-rouge 12. La génération de l'image I(x), de même allure que la courbe v = f(x) de la figure 3 de pas $\Lambda$, peut être alors obtenue, comme représenté à la figure 10 par l'intermédiaire d'un tube cathodique 13 dont l'image de la face avant est projetée sur le photoconducteur, la brillance de l'image peut alors être amplifiée par utilisation d'un amplificateur micro-canaux.

L'utilisation d'une telle valve optique présente les avantages suivants par rapport à la première solution décrite :
— Pas de gravure des électrodes.
— Fonctionnement bi-dimensionnel obtenu en modifiant l'orientation du réseau sur le tube cathodique.
— Le pas $(\Lambda)_{Min}$ peut être rendu inférieur à 100 $\mu$m (lié à la résolution spatiale de la valve).
Un dispositif selon l'invention trouvera en particulier son application dans les systèmes suivants :
— imagerie active, en tant que dispositif de balayage et de prépointage rapide à accès aléatoire fonctionnant aussi bien à l'émission qu'à la réception.
— dispositifs de correction de fronts d'onde à commande électrique ou optique.

**Revendications**

1. Dispositif de déflexions variable d'un faisceau (12) infra-rouge polarisé, caractérisé en ce qu'il comprend une couche de cristaux liquides (2), des moyens de modulation de cette couche de cristaux liquides (2) et des moyens de génération de signaux de commande électriques, ces moyens de modulation appliquant aux bornes de cette couche (2) ces signaux de commande, les moyens de modulation de la couche de cristaux liquides comportant des électrodes (5) disposées sur les deux faces de cette couche (2), les électrodes de la face d'incidence du faisceau infra-rouge étant transparentes, isolées électriquement et disposées, selon au moins une direction, sur des zones équidistantes entre elles et séparées d'espaces interélectrodes de grandeur comprise entre 1 et 10 micromètres, une électrode commune (3) étant disposée sur l'autre face de cette couche de cristaux liquides, et en ce que les signaux de commande permettent de créer dans cette couche (2) des variations locales d'indice formant un réseau de diffraction de ce faisceau (12) de pas réglable, ces signaux de commande correspondant à une répartition de la tension sur les électrodes séparées (5) par rapport à l'électrode commune (3) qui est une répartition périodique en dents de scie variant progressivement, au cours de chaque période de la dent de scie entre une valeur minimum et une valeur maximum selon des marches d'escalier, ces signaux comportant plus de deux marches par période de façon que pour l'amplitude maximum le déphasage du faisceau (12) soit égal à 2 π.

2. Dispositif selon la revendication 1, caractérisé en ce que l'espace interélectrode est de 5 micromètres.

3. Dispositif selon la revendication 1, caractérisé en ce que la largeur des électrodes est comprise dans la gamme de 5 micromètres à 25 micromètres.

4. Dispositif selon la revendication 1, caractérisé en ce que l'électrode commune (3) est une électrode réfléchissante au rayonnement infra-rouge.

5. Dispositif selon la revendication 1, caractérisé en ce que les électrodes (5) de la face d'incidence du faisceau sont en germanium.

6. Dispositif selon la revendication 1, caractérisé en ce que les électrodes (5) disposées sur la face d'incidence du faisceau infra-rouge ont la forme de bandes parallèles, chacune des électrodes étant portée, par rapport à l'électrode commune (3), à une tension correspondant à un palier du signal de commande, de manière à présenter une répartition périodique du potentiel sur ces électrodes (5) correspondant au signal de commande.

7. Dispositif selon la revendication 6, caractérisé en ce qu'il comprend une deuxième couche de cristaux liquides disposée de l'autre côté de l'électrode commune (3) par rapport à la première couche (2), cette électrode commune (3) étant transparente, la face extérieure de la seconde couche de cristaux liquides comportant des électrodes ayant la forme de bandes parallèles, isolées entre elles et transparentes, ces électrodes ayant une direction perpendiculaire avec la direction des électrodes déposées sur la première couche de cristaux liquides (2), le faisceau infra-rouge étant défléchi en traversant ledit dispositif.

8. Dispositif selon la revendication 1, caractérisé en ce que les électrodes disposées sur la face d'incidence du faisceau infra-rouge sont situées dans des plages équidistantes selon deux directions perpendiculaires et séparées d'espaces interélectrodes compris 1 et 10 micromètres, chacune des électrodes étant portée, par rapport à l'électrode commune (3), à une tension correspondant à un palier du signal de commande, la répartition du potentiel sur ces électrodes étant donc une répartition périodique correspondant au signal de commande.

9. Dispositif selon la revendication 8, caractérisé en ce que les signaux de commande sont déphasés d'une manière régulière d'une ligne d'électrode par rapport à la suivante.

10. Dispositif de déflexion variable d'un faisceau (12) infra-rouge polarisé, caractérisé en ce qu'il comprend une couche de cristaux liquides (2), des moyens de modulation de cette couche de cristaux liquides à l'aide d'un signal de commande électrique, et cette dite couche (2) de cristaux liquides est disposée entre d'une part la première face d'une lame photoconductrice (11) dont l'autre face supporte une première électrode (6) et d'autre part, une face d'une lame support (10) qui supporte une seconde électrode (3), une tension électrique étant appliquée auxdites première et seconde électrodes, le signal de commande étant réalisé par un rayonnement d'inscription envoyé du côté de la lame photoconductrice permettant ainsi de créer dans cette couche (2) des variations locales d'indice formant un réseau de diffraction de pas réglable dudit faisceau (12), et la répartition dudit signal de commande correspondant à la répartition des signaux définie dans la revendication 1.

11. Dispositif selon la revendication 10, caractérisé en ce qu'il comprend une couche intermédiaire réfléchissante entre la lame photoconductrice (11) et la couche (2) de cristaux liquides.

12. Dispositif selon la revendication 10, caractérisé en ce que les première et seconde électrodes sont constituées par des couches d'oxyde d'étain déposé par pulvérisation cathodique.

13. Dispositif selon la revendication 10, caractérisé en ce que les première et seconde électrodes sont constituées par des couches d'oxyde d'indium déposé par pulvérisation cathodique.

14. Dispositif selon la revendication 11, caractérisé en ce qu'il comprend un tube cathodique (13) dont l'image de la face avant est projetée sur la lame photoconductrice (11) ce qui permet de réaliser le rayonnement d'inscription.

15. Dispositif selon l'une quelconque des revendications 1 à 14, caractérisé en ce que la couche de cristaux liquides est réalisée en Pentyl-Cyanobiphénil.

## Claims

1. A variable device for deflecting a polarized infrared beam (12), characterized in that it comprises a liquid cristal layer (2), means for modulating this liquid cristal layer (2) and means for generating electric control signals, these modulation means applying said control signals to the terminals of this layer (2), the means for modulating the liquid cristal layer comprising electrodes (5) disposed on both surfaces of this layer (2), the electrodes of the infrared beam incidence surface being transparent, electrically insulated and disposed according to at least one direction in mutually equidistant zones and separated by interelectrode spaces of a width between 1 and 10 micrometer, a common electrode (3) being disposed

6

on the other surface of this cristal liquid layer, and that the control signals are conceived to create in this layer (2) local index variations creating a beam (12) diffraction grating of variable pitch, these control signals corresponding to a voltage distribution over the separated electrodes (5) with respect to the common electrode (3) which is a periodic distribution in the form of a progressively variable sawtooth during each period of the sawtooth between a minimum and a maximum value according to staircase steps, these signals including more than two steps for each period such that for the maximum amplitude, the phase shift of the beam (12) is equal to $2\pi$.

2. A device according to claim 1, characterized in that the interelectrode space is 5 micrometers in width.

3. A device according to claim 1, characterized in that the width of the electrodes is included between 5 micrometers and 25 micrometers.

4. A device according to claim 1, characterized in that the common electrode (3) is an electrode which reflects the infra-red radiation.

5. A device according to claim 1, characterized in that the electrodes (5) of the beam incidence surface are made of Germanium.

6. A device according to claim 1, characterized in that the electrodes (5) disposed on the infrared beam incidence surface are constituted by parallel strips, each one of the electrodes being brought with respect to a common electrode (3) to a voltage corresponding to a control signal level such that a periodic distribution of the potential on these electrodes (5) corresponding to the control signal is established.

7. A device according to claim 6, characterized in that it comprises a second liquid cristal layer disposed on the opposite side of the common electrode (3) with respect to the first layer (2), this common electrode (3) being transparent, the outer surface of the second liquid cristal layer comprising electrodes made of parallel strips which are mutually insulated and transparent, these electrodes having a direction perpendicular to that of the electrodes disposed on the first liquid cristal layer (2), the infrared beam being deflected during passage through said device.

8. A device according to claim 1, characterized in that the electrodes disposed on the infrared beam incidence surface are situated in equidistant areas according to two perpendicular directions and are separated by interelectrode spaces having a width between 1 and 10 micrometer, each one of the electrodes being brought with respect to a common electrode (3) to a voltage corresponding to a level of the control signal, the distribution of the potential on these electrodes being thus a periodic distribution corresponding to the control signal.

9. A device according to claim 8, characterized in that the control signals are regularly phase shifted from one electrode line to the next one.

10. A variable deflection device for deflecting a polarized infrared beam (12), characterized in that it comprises a liquid cristal layer (2) and means for modulating this liquid cristal layer by means of an electric control signal, that said liquid cristal layer (2) is disposed between on the one hand the first surface of a photoconducting blade (11), the other surface of which supports a first electrode (6), and on the other hand a surface of a support blade (10) which supports a second electrode (3), an electric voltage being applied to said first and second electrodes, the control signal being realised by a read-in radiation applied to the photoconducting blade, thus allowing to create in this layer (2) local index variation which constitute a diffraction grating of an adjustable pitch for said beam (12), and the distribution of said control signal corresponding to the distribution of signals defined in claim 1.

11. A device according to claim 10, characterized in that it comprises an intermediate reflecting layer between the photoconducting blade (11) and the liquid cristal layer (2).

12. A device according to claim 10, characterized in that the first and second electrodes are constituted by tin oxide layers deposited by cathode ray sputtering.

13. A device according to claim 10, characterized in that the first and second electrodes are constituted by indium oxide layers deposited by cathode ray sputtering.

14. A device according to claim 11, characterized in that it comprises a cathode ray tube (13) the front side picture of which is projected onto the photoconducting blade (11), thus implementing the write-in radiation.

15. A device according to any one of claims 1 to 14, characterized in that the liquid cristal layer is made of Pentylcyanobiphenil.

## Patentansprüche

1. Variable Vorrichtung zur Ablenkung eines polarisierten Infrarotstrahls (12), dadurch gekennzeichnet, daß sie eine Flüssigkristallschicht (2), Mittel zur Modulation dieser Flüssigkristallschicht (2) und Mittel zur Erzeugung von elektrischen Steuersignalen aufweist, wobei die Modulationsmittel an die Anschlüsse der Schicht (2) die Steuersignale anlegen und die Mittel zur Modulation der Flüssigkristallschicht Elektroden (5) aufweisen, die an den beiden Seiten dieser Schicht (2) angeordnet sind, wobei die Elektroden auf der Seite des einfallenden Infrarotstrahls transparent, elektrisch isoliert und in mindestens einer Richtung in Zonen angeordnet sind, die voneinander gleiche Abstände aufweisen und durch Zwischenelektrodenräume einer Größe zwischen 1 und 10 Mikrometer getrennt sind, während eine gemeinsame Elektrode (3) auf der anderen Seite dieser Flüssigkristallschicht liegt, und daß die Steuersignale in dieser Schicht (2) örtliche Indexveränderungen zu erzeugen vermögen, die ein Brechungsgitter dieses Strahls (12) mit regelbarem Gitterabstand zu bilden erlauben, wobei die Steuersignale einer Verteilung der Spannung über die bezüglich der gemeinsamen Elektrode (3) getrennten Elektroden (5) entsprechen, die eine periodische Verteilung in Form eines im Verlauf jeder Periode zwischen einem Mindestwert und einem Höchstwert gemäß Treppenstufen progressiv variablen Sägezahns ist, und wobei die Signale mehr als zwei Treppenstufen pro Periode umfassen, derart, daß für die Maximalamplitude die Phasenverschiebung des Strahls (12) gleich $2\pi$ ist.

2. Vorrichtung nach Anspruch 1, dadurch gekennzeichnet, daß der Zwischenelektrodenabstand 5 Mikrometer beträgt.

3. Vorrichtung nach Anspruch 1, dadurch gekennzeichnet, daß die Breite der Elektroden zwischen 5 Mikrometern und 25 Mikrometern liegt.

4. Vorrichtung nach Anspruch 1, dadurch gekennzeichnet, daß die gemeinsame Elektrode (3) eine die Infrarotstrahlung reflektierende Elektrode ist.

5. Vorrichtung nach Anspruch 1, dadurch gekennzeichnet, daß die Elektroden (5) auf der Seite des Strahleinfalls aus Germanium sind.

6. Vorrichtung nach Anspruch 1, dadurch gekennzeichnet, daß die auf der Seite des Infrarot-Strahleinfalls liegenden Elektroden (5) die Form von parallelen Bändern besitzen, wobei jede der Elektroden bezüglich der gemeinsamen Elektrode (3) auf eine Spannung entsprechend einem Pegel des Steuersignals gebracht ist, so daß sich eine periodische Verteilung des Potentials über diese Elektroden (5) entsprechend dem Steuersignal ergibt.

7. Vorrichtung nach Anspruch 6, daß sie außerdem eine zweite Flüssigkristallschicht aufweist, die auf der anderen Seite der gemeinsamen Elektrode (3) bezüglich der ersten Schicht (2) liegt, wobei die gemeinsame Elektrode (3) transparent ist und die Außenseite der zweiten Flüssigkristallschicht Elektroden trägt, die die Form paralleler Bänder besitzen, voneinander isoliert und transparent sind, wobei diese Elektroden eine Richtung senkrecht zur Richtung der auf die erste Flüssigkristallschicht (2) aufgebrachten Elektroden besitzt und der Infrarotstrahl beim Durchqueren der Vorrichtung abgelenkt wird.

8. Vorrichtung nach Anspruch 1, dadurch gekennzeichnet, daß die auf der Seite des Infrarot-Strahleinfalls liegenden Elektroden in äquidistanten Flecken gemäß zwei zueinander senkrechten Richtungen liegen und durch Zwischenelektrodenabstände von zwischen 1 und 10 Mikrometer Breite voneinander getrennt sind, wobei jede der Elektroden bezüglich der gemeinsamen Elektrode (3) auf eine Spannung entsprechend einem Pegel des Steuersignals gebracht ist und die Potentialverteilung auf diese Elektrode somit eine periodische Verteilung entsprechend dem Steuersignal ist.

9. Vorrichtung nach Anspruch 8, dadurch gekennzeichnet, daß die Steuersignale regelmäßig von einer Elektrodenzeile zur nächsten phasenverschoben sind.

10. Vorrichtung zur variablen Ablenkung eines polarisierten Infrarotstrahls (12), dadurch gekennzeichnet, daß sie eine Flüssigkristallschicht (2) und Mittel zur Modulation dieser Flüssigkristallschicht mithilfe eines elektrischen Steuersignals aufweist, und daß diese Flüssigkristallschicht (2) zwischen einerseits der ersten Seite einer fotoleitenden Lamelle (11), deren andere Seite eine erste Elektrode (6) trägt, und andererseits einer Seite einer Trägerlamelle (10) angeordnet ist, die eine zweite Elektrode (3) trägt, wobei eine elektrische Spannung an die erste und die zweite Elektrode angelegt wird und das Steuersignal durch eine Schreibstrahlung realisiert wird, die von der Seite der fotoleitenden Lamelle auftrifft, so daß es möglich ist, in dieser Schicht (2) örtliche Indexveränderungen zu erzeugen, die ein Brechungsgitter für den Strahl (12) mit einem regelbaren Gitterabstand zu bilden erlauben, wobei die Verteilung des Steuersignals der Verteilung der in Anspruch 1 definierten Signale entspricht.

11. Vorrichtung nach Anspruch 10, dadurch gekennzeichnet, daß sie eine reflektierende Zwischenschicht zwischen der fotoleitenden Lamelle (11) und der Flüssigkristallschicht (2) enthält.

12. Vorrichtung nach Anspruch 10, dadurch gekennzeichnet, daß die erste und die zweite Elektrode von Zinnoxidschichten gebildet werden, die durch Kathodenstrahlzerstäubung aufgebracht werden.

13. Vorrichtung nach Anspruch 10, dadurch gekennzeichnet, daß die erste und die zweite Elektrode von Indiumoxidschichten gebildet werden, die durch Kathodenstrahlzerstäubung aufgebracht werden.

14. Vorrichtung nach Anspruch 11, dadurch gekennzeichnet, daß sie eine Kathodenstrahlröhre (13) aufweist, deren Bild an der Vorderseite auf die fotoleitende Lamelle (11) projiziert wird, wodurch die Schreibstrahlung erzeugt wird.

15. Vorrichtung nach einem beliebigen der Ansprüche 1 bis 14, dadurch gekennzeichnet, daß die Flüssigkristallschicht aus Pentyl-Cyanobiphenil besteht.

# FIG.1

# FIG. 2

# FIG.3

# FIG.4

# FIG.5

# FIG.6

# FIG.7

# FIG. 8

# FIG. 9

# FIG.10

4